# EUROPEAN PATENT APPLICATION

(11) **EP 3 643 892 A1**
(43) Date of publication of application: **29.04.2020**
(21) Application number: 18828291.7
(22) Date of filing: 27.06.2018
(51) Int. Cl.: F01N 3/08, B01D 53/94

(54) **UREA WATER SUPPLY DEVICE**

(30) Priority: 05.07.2017 JP 2017131584
(71) Applicant: Yanmar Co., Ltd., Osaka-shi, Osaka 530-8311 (JP)
(72) Inventor: MORIMITSU, Daisuke, Osaka-shi Osaka 530-8311 (JP); FUKUI, Yoshinori, Osaka-shi Osaka 530-8311 (JP); INOUE, Tsuyoshi, Osaka-shi Osaka 530-8311 (JP)
(74) Representative: Isarpatent
(86) International application number: PCT/JP2018/024281
(87) International publication number: WO 2019/009149

(57) **Abstract**

A urea water supply device (10) supplies urea water to purify exhaust gas from an electric power generating engine (23). The urea water supply device (10) includes: a urea water injector (17); a urea water flow route (60) in which urea water flows; a clean water supply route (61) in which clean water flows; and a urea water amount adjustment valve (14) and a urea water flow meter (15) provided in the urea water flow route (60). The clean water supply route (61) merges with the urea water flow route (60) on the downstream side of the urea water amount adjustment valve (14) and the urea water flow meter (15).

## Description

### Technical Field

The present invention mainly relates to a urea water supply device configured to inject urea water for SCR. More specifically, the present invention relates to cooling of a urea water injector.

### Background Art

Traditionally, an SCR (Selective Catalytic Reduction) system is well known as an exhaust gas purification device configured to purify exhaust gas from an internal combustion engine (in particular, a diesel engine), by reducing nitrogen oxide (NOx) contained in the exhaust gas with a use of a reductant such as urea water or light oil. In this exhaust gas purification device, the exhaust gas is typically reduced and purified by a predetermined amount of the reductant injected from an injector into an exhaust path.

Suppose that a distal end portion of the injector provided in the exhaust path is exposed to high-temperature exhaust gas. This may vaporize the urea water in the injector before the urea water is injected, which may consequently lead to an injection amount of urea water falling short of an intended injection amount. Further, the above case may also lead to, for example, deposition of urea crystals and carbonization of light oil at an injection port of the injector, which may lead to clogging. To suppress or reduce such a problem, there has been suggested an exhaust gas purification device having injector cooling means. Such an exhaust gas purification device is disclosed in Patent Literature 1 (hereinafter, PTL 1).

In the exhaust gas purification device of PTL 1, an exhaust temperature is calculated from an engine rotation number and a fuel injection amount. Based on the calculated exhaust temperature, turbocharged air is introduced into an airflow passage installed inside an injector main body, thereby cooling the injector.

### Citation List

### Patent Literature

PTL 1: Japanese Patent Application Laid-Open No. 2004-211635

### Summary of Invention

### Technical Problem

However, in the above-described configuration of PTL 1, a separate airflow passage for cooling is needed inside the injector main body, which makes the structure of the injector complicated. For this reason, there is a room for improvement in terms of labor and cost at manufacturing stage.

The present invention is made in view of the above problems, and an object of the present invention is to provide a urea water supply device that can cool the injector with a simple structure.

### Solution to Problem and Advantageous Effect

Problems to be solved by the invention are as described above, and next, means for solving the problems and effects thereof will be described.

In an aspect of the present invention, a urea water supply device having the following configuration is provided. Namely, the urea water supply device includes: a urea water injector; a urea water flow route; a clean water supply route; and urea water amount adjusting means. The urea water supply device is configured to supply urea water to purify exhaust gas from an engine. In the urea water flow route, the urea water flows. The clean water supply route supplies clean water to the urea water injector. The urea water amount adjusting means is provided in the urea water flow route. The clean water supply route is merged with the urea water flow route on a downstream side of the urea water amount adjusting means.

This structure can supply an amount of clean water needed for cooling the urea water injector while securing a required amount of urea by the urea water amount adjusting means. Therefore, cooling of the urea water injector can be achieved in a simple structure without a need of a separate cooling system or a complicated structure of the urea water injector for cooling the urea water injector.

The urea water supply device is preferably such that the clean water supply route includes an electromagnetic valve configured to switch between supplying and stop supplying of the clean water; and pressure adjusting means configured to adjust a pressure of the clean water.

With this, the clean water can be supplied to the injector as needed, and the pressure of the clean water supplied can be adjusted.

The urea water supply device is preferably such that the clean water supply route has an orifice configured to reduce a flow rate of the clean water.

With this, a clean water supply amount can be adjusted by utilizing a differential pressure between the clean water and the urea water.

The urea water supply device may be such that the clean water supply route includes an amount adjustment valve capable of changing a clean water supply amount; and a flow meter configured to measure a flow rate of the clean water.

The structure can accurately supply an amount of clean water required for cooling the urea water injector.

### Brief Description of Drawings

[FIG. 1] A schematic side view of a ship having a urea water supply device related to an embodiment of the present invention.
[FIG. 2] A perspective view showing a structure of an exhaust gas purification device.
[FIG. 3] A schematic view showing a main structure of the urea water supply device.
[FIG. 4] A front view showing a structure of the urea water supply device.
[FIG. 5] A schematic view showing a structure of a modification of the urea water supply device.

### Description of Embodiments

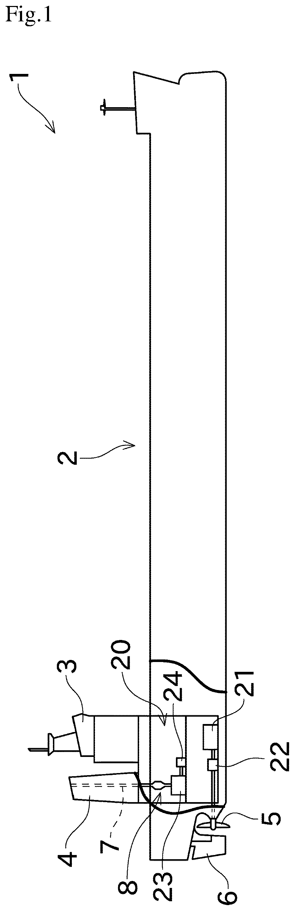

Next, an embodiment of the present invention will be described with reference to the drawings. First, a ship 1 including a urea water supply device 10 of the present embodiment will be described with reference to FIG. 1. FIG. 1 is a schematic side view of the ship 1.

As shown in FIG. 1, the ship 1 of the present embodiment includes: a ship hull 2; a bridge 3 provided on a stern side of the ship hull 2; a funnel (chimney) 4 provided in the rear of the bridge 3; and a screw 5 and a rudder 6 which are provided at a lower back portion of the ship hull 2.

Inside the ship hull 2, an engine room 20 is provided under the bridge 3 and the funnel 4. In the engine room 20, a propelling engine 21, a speed reducer 22, an electric power generating engine 23, and an electric power generator 24 are arranged.

The propelling engine 21 is a diesel engine that generates a drive force for propelling the ship 1. The drive force generated by the propelling engine 21 is reduced by the speed reducer 22 and then transmitted to a rotation shaft of the screw 5.

The electric power generating engine 23 is a diesel engine configured to generate a drive force for the electric power generator 24 which supplies electric power to be used in the ship. Exhaust gas generated by the electric power generating engine 23 is discharged from the funnel 4 to the outside through an exhaust path 7. To the exhaust path 7, an exhaust gas purification device 8 is provided. The exhaust gas purification device 8 can purify NOx (nitrogen oxide) contained in exhaust gas generated by the propelling engine 21 through a selective catalytic reduction.

In the ship 1, one or more electric power generating engines 23 can be provided. In cases where a plurality of electric power generating engines 23 are provided, the exhaust path 7 and the exhaust gas purification device 8 are provided to each of the power generation engines 23.

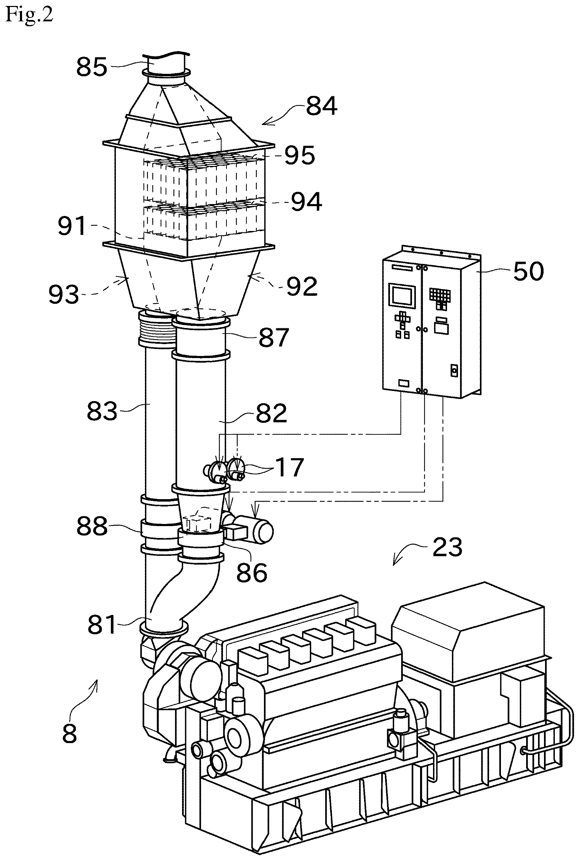

Next, the exhaust gas purification device 8 will be described in detail with reference to FIG. 2. FIG. 2 is a perspective view showing a structure of the exhaust gas purification device 8. It should be noted that "upstream" and "downstream" in the following description mean upstream and downstream in a direction in which exhaust gas flows in the exhaust gas purification device 8, respectively.

As shown in FIG. 2, the exhaust gas purification device 8 includes, in an order from the upstream side in the direction in which the exhaust gas flows: a first exhaust pipe 81; a catalytic route pipe 82 and a bypass route pipe 83; a catalytic reactor 84; and a second exhaust pipe 85. Further, the exhaust gas purification device 8 includes a control unit 50 for controlling each part.

The control unit 50 includes a CPU, a ROM, a RAM, an I/O, and the like which are not shown. The CPU can read various programs and the like from the ROM and execute them. The ROM stores various programs, data, and the like, for performing control related to purification of the exhaust gas.

The first exhaust pipe 81 constitutes a route for guiding the exhaust gas to the catalytic route pipe 82 and the bypass route pipe 83. The upstream side end portion of the first exhaust pipe 81 is connected to an exhaust gas manifold of the electric power generating engine 23. The downstream side end portion of the first exhaust pipe 81 branches into exhaust paths each connected to each of the catalytic route pipe 82 and the bypass route pipe 83.

The catalytic route pipe 82 constitutes a route in which the exhaust gas flows when the exhaust gas purification device 8 performs the selective catalytic reduction. In the catalytic route pipe 82, a catalytic reduction valve 86, a urea water injector 17, and an exhaust gas mixer 87 configured to mix the exhaust gas and the urea water are arranged in this order from the upstream side.

The catalytic reduction valve 86 is arranged on the upstream side of the catalytic route pipe 82, and is switchable between an open state and a closed state based on a signal from the control unit 50.

The urea water injector 17 is configured to be capable of injecting urea water towards the downstream side of the exhaust gas. The urea contained in the injected urea water is exposed to heat of the exhaust gas, and is thermally decomposed and hydrolyzed to become ammonia (see the following reaction formulas (1) and (2)).
Thermal decomposition:

(NH₂)₂CO → NH₃+HNCO ····· (1)

Hydrolysis:

HNCO+H₂O → NH₃+CO₂ ····· (2)

The exhaust gas mixer 87 is arranged on the downstream side of the first exhaust pipe 81, a predetermined distance away from the urea water injector 17. The exhaust gas mixer 87 mixes the exhaust gas with the urea water (ammonia) in the form of mist by generating swirling flow inside.

The bypass route pipe 83 constitutes a route in which the exhaust gas flows when the exhaust gas purification device 8 does not perform the selective catalytic reduction, and is arranged in parallel to the catalytic route pipe 82. In the bypass route pipe 83, a bypass valve 88 is arranged. The bypass valve 88 is configured to be switchable between an open state and a closed state based on a signal from the control unit 50.

The catalytic reactor 84 is formed in a tubular shape (specifically, in a rectangle-tubular shape), and is made of a refractory metal. The catalytic reactor 84 is connected to both the downstream side end portion of the catalytic route pipe 82 and the downstream side end portion of the bypass route pipe 83.

Inside the catalytic reactor 84, a partition plate 91 is arranged. With the partition plate 91, an internal space of the catalytic reactor 84 is partitioned into a catalytic reduction route 92 and a bypass route 93.

The catalytic reduction route 92 is arranged in such a manner that the catalytic route pipe 82 on the upstream side and the second exhaust pipe 85 on the downstream side are connected to each other. In the catalytic reduction route 92, a NOx catalyst 94 which promotes reduction of NOx (nitrogen oxide) contained in the exhaust gas and an oxidation catalyst 95 which promotes oxidation of ammonia are arranged in series, in this order from the upstream side.

Each of the NOx catalyst 94 and the oxidation catalyst 95 has a honeycomb structure having a large number of cells each partitioned by a porous partition wall, and includes a metal catalyst such as alumina, zirconia, vanadia/titanium oxide, or zeolite.

The NOx catalyst 94 purifies the exhaust gas by promoting a reduction reaction in which the NOx contained in the exhaust gas is selectively reduced by ammonia serving as a reductant which is generated by thermally decomposing and hydrolyzing the urea water injected by the urea water injector 17 (see the following reaction formula (3)).
Reaction with NOx catalyst 94:

NO+NO₂+2NH₃ → 2N₂+3H₂O ···· (3)

When ammonia is excessively generated in the NOx catalyst 94, the oxidation catalyst 95 promotes an oxidation reaction of unreacted ammonia out of the NOx catalyst 94, and oxidizes the unreacted ammonia into harmless nitrogen (see the following reaction formula (4)).
Reaction with oxidation catalyst 95:

4NH₃+3O₂ → 2N₂+6H₂O ···· (4)

The bypass route 93 is arranged in such a manner that the bypass route pipe 83 on the upstream side and the second exhaust pipe 85 on the downstream side are connected to each other. Since the catalytic reduction route 92 and the bypass route 93 are arranged adjacent to each other, the heat of the exhaust gas when it passes through the bypass route 93 can warm up the NOx catalyst 94 and the oxidation catalyst 95 provided on the side of the catalytic reduction route 92. Thus, the NOx catalyst 94 and the oxidation catalyst 95 can always be maintained in an active state, regardless of whether or not the exhaust gas is purified. Therefore, the purification effect of the exhaust gas can be exerted immediately upon switching from a state of not performing the selective catalytic reduction to a state of performing the selective catalytic reduction.

The second exhaust pipe 85 is connected to the downstream side of the catalytic reactor 84. The exhaust gas flowed from the catalytic reactor 84 to the second exhaust pipe 85 is discharged to the outside through the above-described funnel 4.

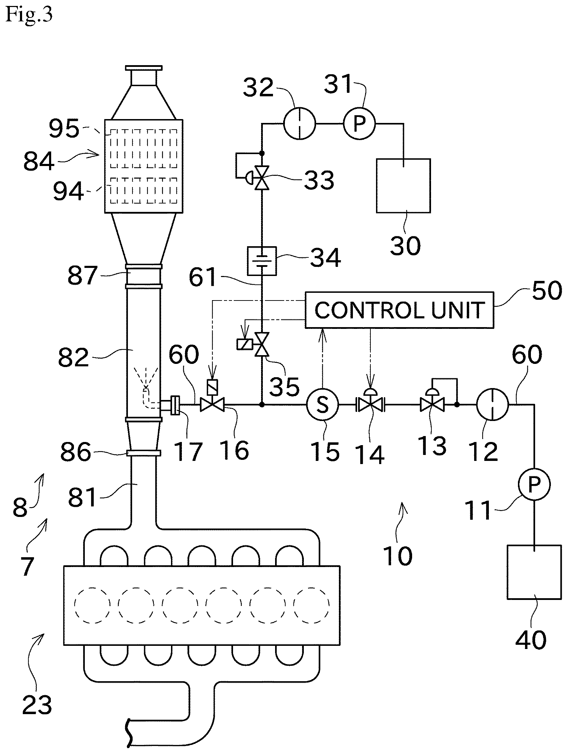

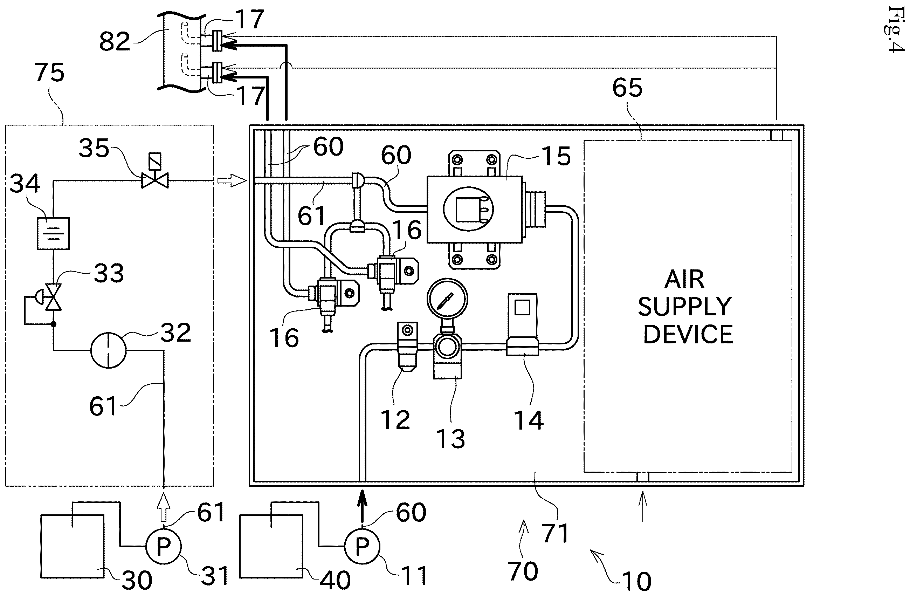

Next, the following details the urea water supply device 10 of the present embodiment with reference to FIG. 3 and FIG. 4. FIG. 3 is a schematic view showing a main structure of the urea water supply device 10. FIG. 4 is a front view showing the structure of the urea water supply device 10.

As shown in FIG. 3 and the like, the urea water supply device 10 includes, in an order from the upstream side of a urea water flow route 60: a urea water supply pump 11; a urea water filter 12; a urea water pressure reducing valve 13; a urea water amount adjustment valve 14; a urea water flow meter 15; a urea water electromagnetic valve 16; and a urea water injector 17.

The urea water filter 12, the urea water pressure reducing valve 13, the urea water amount adjustment valve 14, the urea water flow meter 15, and the urea water electromagnetic valve 16 are arranged all together in a supply unit 70 shown in FIG. 4. The supply unit 70 includes a frame 71 that allows attachment of the above-described valves and the like.

Urea water supplied from the urea water supply pump 11 flows along the urea water flow route 60 sequentially from the urea water filter 12, the urea water pressure reducing valve 13, the urea water amount adjustment valve 14, the urea water flow meter 15, and the urea water electromagnetic valve 16, and is supplied to the urea water injector 17.

The urea water supply pump 11 is driven by a not-shown motor, and is configured to take in urea water stored in a urea water tank 40.

The urea water filter 12 removes a foreign matter in the urea water supplied by the urea water supply pump 11. With this, clogging of the urea water injector 17 by a foreign matter can be suppressed or reduced. It should be noted that the urea water filter 12 may be provided on the upstream side of the urea water supply pump 11.

The urea water pressure reducing valve 13 is configured to maintain the pressure of the urea water at a constant pressure, irrespective of the flow rate of the urea water supplied by the urea water supply pump 11.

The urea water amount adjustment valve 14 is electrically connected to the control unit 50. The urea water amount adjustment valve 14 adjusts the flow rate of the urea water flowing in the urea water flow route 60 by changing its opening degree according to a control command from the control unit 50. However, the flow rate of the urea water may be adjusted by, for example, controlling the rotation number of a not-shown motor that drives the urea water supply pump 11, instead of changing the opening degree of the urea water amount adjustment valve 14.

The urea water flow meter 15 measures the flow rate of the urea water supplied to the urea water injector 17. The urea water flow meter 15 is electrically connected to the control unit 50, and the flow rate of the urea water detected by the urea water flow meter 15 is input to the control unit 50. The control unit 50 controls the urea water amount adjustment valve 14 so as to match the flow rate obtained with the target flow rate. With this feedback control, the control unit 50 can accurately control the amount of the urea water to be supplied to the urea water injector 17, through the urea water amount adjustment valve 14.

The urea water electromagnetic valve 16 is electrically connected to the control unit 50, and can be switched between supplying and stop supplying of the urea water to the urea water injector 17 by opening or closing according to the control command from the control unit 50.

The urea water injector 17 is made of a tubular member, and is configured to supply the urea water to the inside of the catalytic route pipe 82. The leading end portion of the urea water injector 17 is inserted into the inside of the catalytic route pipe 82 from the outside of the catalytic route pipe 82.

Although FIG. 3 shows a single urea water electromagnetic valve 16 and a single urea water injector 17, the urea water flow route 60 is actually branched into two as shown in FIG. 4, and therefore two urea water electromagnetic valves 16 and urea water injectors 17 are arranged.

The urea water injector 17 has an air-assisted structure that injects the urea water while mixing the urea water with air. The urea water is supplied to the urea water injector 17 through the urea water flow route 60, and the compressed air is supplied to the urea water injector 17 through an air supply device 65 arranged in the supply unit 70, as schematically shown in FIG. 4. This can promote gasification of the urea water injected in the form of mist, and efficiently cause a reaction for purification of the exhaust gas.

As described, since the compressed air is supplied to the urea water injector 17, an effect of the compressed air taking away the heat can also be expected. However, cooling of the urea water injector 17 by the air alone requires an increase in the flow rate of the compressed air, which consequently leads to a significant increase in costs.

In view of this, in the urea water supply device 10 of the present embodiment, clean water is used to enhance the cooling effect of the urea water injector 17. More specifically, in the urea water supply device 10, the urea water flow route 60 on the downstream side of the urea water flow meter 15 is merged with a clean water supply route 61 configured to supply clean water, as shown in FIG. 3.

In the present embodiment, the clean water can be, for example, tap water supplied at a harbor. Alternatively, the clean water can be produced by boiling and distilling the sea water with the heat of the exhaust gas and the like, by using a not-shown water producing device provided in the ship 1.

As shown in FIG. 3, the clean water supply route 61 includes, in an order from the upstream side: a clean water pump 31; a clean water filter 32; a clean water pressure reducing valve (pressure adjusting means) 33; an orifice 34; and a clean water electromagnetic valve 35. As shown in FIG. 4, the clean water filter 32, the clean water pressure reducing valve 33, the orifice 34, and the clean water electromagnetic valve 35 are arranged all together in a clean water unit 75 arranged in the vicinity of the supply unit 70.

The clean water pump 31 is driven by a not-shown motor, and is configured to take in the clean water stored in a clean water tank 30.

The clean water filter 32 removes a foreign matter in the clean water supplied by the clean water pump 31. With this, clogging of the urea water injector 17 by a foreign matter can be suppressed or reduced.

The clean water pressure reducing valve 33 is configured to maintain the pressure of the clean water at a constant pressure, irrespective of the flow rate of the clean water flowing in the clean water supply route 61.

The orifice 34 is configured to reduce the flow rate of the clean water passing through the clean water supply route 61.

The clean water electromagnetic valve 35 is electrically connected to the control unit 50, and can be switched between supplying and stop supplying of the clean water to the urea water flow route 60 by opening or closing according to the control command from the control unit 50.

In this structure, when the clean water pump 31 is operated while the clean water electromagnetic valve 35 is open, the clean water is supplied from the clean water supply route 61 to the urea water flow route 60, and the clean water mixed with the urea water is supplied to the urea water injector 17.

As described above, in the present embodiment, the urea water whose quantity is adjusted by urea water amount adjusting means constituted by the urea water amount adjustment valve 14 and the urea water flow meter 15 is mixed with the clean water. This arrangement, while substantially maintaining the amount of the urea required for purification of the exhaust gas, can increase the amount of heat taken away from the urea water injector 17 by the amount of the clean water additionally supplied, thereby cooling the urea water injector 17. Further, since the urea water injector 17 can be cooled with clean water which is less expensive than the compressed air, running costs of the electric power generating engine 23 can be reduced. Further, since the above structure achieves substantial cooling by injecting, from the urea water injector 17, the urea water mixed with the clean water as cooling water, there is no need of providing the urea water injector 17 with a special route for a cooling fluid as in the case of PTL 1. Thus, the structure of the urea water injector 17 can be simplified.

The urea water supply device 10 of the present embodiment is configured so that the flow rate of the clean water is automatically changed by the action of the orifice 34. To be more specific, a secondary pressure of the clean water pressure reducing valve 33 is set so that, while the clean water electromagnetic valve 35 and the urea water electromagnetic valve 16 are open, a clean water supply pressure on the upstream side of the orifice 34 is higher than an upper limit value of a urea water supply pressure in the urea water flow route 60. Thus, when the pressure on the urea water side rises, a differential pressure between the upstream and the downstream of the orifice 34 becomes small. This reduces the amount of the clean water passing through the orifice 34 and merging with the urea water. On the other hand, when the pressure on the urea water side drops, the differential pressure between the upstream and the downstream of the orifice 34 becomes great. This increases the amount of the clean water passing through the orifice 34 and merging with the urea water. This way, the clean water can be efficiently used, while securing a sufficient injection flow rate for cooling the urea water injector 17.

As hereinabove described, a urea water supply device 10 of the present embodiment includes: a urea water injector 17; a urea water flow route 60 in which urea water flows; a clean water supply route 61 configured to supply the clean water to the urea water injector 17; and the urea water amount adjustment valve 14 and the urea water flow meter 15 provided in the urea water flow route 60 and is configured to supply the urea water to purify exhaust gas from an electric power generating engine 23. The clean water supply route 61 merges with the urea water flow route 60 on the downstream side of the urea water amount adjustment valve 14 and the urea water flow meter 15.

This structure can supply an amount of clean water needed for cooling the urea water injector 17 while securing a required amount of urea by the urea water amount adjustment valve 14 and the urea water flow meter 15. Therefore, cooling of the urea water injector 17 can be achieved in a simple structure without a need of a separate cooling system or a complicated structure of the urea water injector 17 for cooling the urea water injector 17.

Further, in the urea water supply device 10 of the present embodiment, the clean water supply route 61 is provided with a clean water electromagnetic valve 35 configured to switch between supplying and stop supplying of the clean water and the clean water pressure reducing valve 33 configured to adjust a pressure of the clean water.

With this, the clean water can be supplied to the urea water injector 17 as needed, and the pressure of the clean water supplied can be adjusted.

Further, in the urea water supply device 10 of the present embodiment, the clean water supply route 61 has an orifice 34 that can adjust a flow rate of the clean water.

With this, a clean water supply amount can be adjusted by utilizing a differential pressure between the clean water and the urea water.

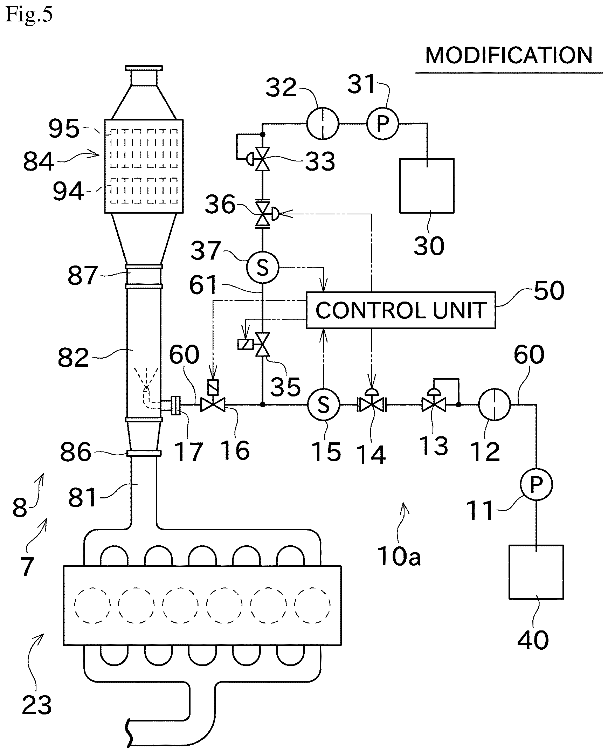

Next, the following describes a modification of the above-described embodiment. FIG. 5 is a schematic view showing a structure of a urea water supply device 10a related to a modification. In the description of the present modification, parts that are identical or similar to those of the above-described embodiment are given identical reference numerals in the drawing, and a description of these parts may be omitted.

The urea water supply device 10a of the present modification includes, as an amount adjusting means, a clean water amount adjustment valve 36 and a clean water flow meter 37, in place of the orifice 34, and is configured to adjust the amount of clean water in a manner similar to adjustment of the amount of urea water.

Specifically, the clean water amount adjustment valve 36 is configured to be capable of changing the flow rate of the clean water flowing in the clean water supply route 61 by changing its opening degree according to a control command from the control unit 50. The clean water flow meter 37 is provided on the downstream side of the clean water amount adjustment valve 36, and measures the flow rate of the clean water flowing in the clean water supply route 61. The flow rate of the clean water detected by the clean water flow meter 37 is input to the control unit 50, and the control unit 50 performs feedback control of the clean water amount adjustment valve 36 so that the obtained flow rate matches the target flow rate. This way, further highly accurate adjustment in relation to the clean water supply amount can be achieved, as compared to the above-described embodiment.

As hereinabove described, in the urea water supply device 10a of the present modification, the clean water supply route 61 includes a clean water amount adjustment valve 36 and a clean water flow meter 37. The clean water amount adjustment valve 36 is capable of changing a clean water supply amount. The clean water flow meter 37 measures a flow rate of the clean water.

The structure can accurately supply an amount of clean water required for cooling of the urea water injector 17.

Although a preferred embodiment of the present invention has been described above, the above-described configuration can be modified, for example, as follows.

The clean water unit 75 may be structured integrally with the supply unit 70 instead of being structured separately.

The above-described embodiment deals with a case where the clean water supply route 61 is merged with the urea water flow route 60 at a point inside the supply unit 70, as shown in FIG. 4. However, the clean water supply route 61 may be merged with the urea water flow route 60 at a point outside the supply unit 70.

The control unit 50 may also be structured integrally with a not-shown ECU configured to control the electric power generating engine 23.

The urea water injector 17 can be an airless injector in which no compressed air is supplied, instead of the air-assisted injector.

Application of the urea water supply device 10, 10a is not limited to the above-described electric power generating engine 23, and the urea water supply device 10 can be applied to, for example, a propelling engine 21, a vehicle engine, and the like.

### Reference Signs List

- 10: urea water supply device
- 14: urea water amount adjustment valve (urea water amount adjusting means)
- 15: urea water flow meter (urea water amount adjusting means)
- 17: urea water injector
- 23: electric power generating engine (engine)
- 60: urea water flow route
- 61: clean water supply route

## Claims

1. A urea water supply device configured to supply urea water for purifying exhaust gas from an engine, comprising:
a urea water injector;
a urea water flow route in which the urea water flows;
a clean water supply route configured to supply clean water to the urea water injector; and
urea water amount adjusting means provided in the urea water flow route,
wherein
the clean water supply route is merged with the urea water flow route on a downstream side of the urea water amount adjusting means.

2. The urea water supply device according to claim 1, wherein
the clean water supply route includes:
an electromagnetic valve configured to switch between supplying and stop supplying of the clean water; and
pressure adjusting means configured to adjust a pressure of the clean water.

3. The urea water supply device according to claim 1, wherein
the clean water supply route has an orifice configured to reduce a flow rate of the clean water.

4. The urea water supply device according to claim 1, wherein
the clean water supply route includes:
an amount adjustment valve capable of changing a clean water supply amount; and
a flow meter configured to measure a flow rate of the clean water.
